# EUROPEAN PATENT SPECIFICATION

(11) **EP 2 435 952 B1**
(45) Date of publication and mention of the grant of the patent: **18.06.2014**
(21) Application number: 10720220.2
(22) Date of filing: 10.05.2010
(51) Int. Cl.: G06K 7/10

(54) **METHOD AND APPARATUS FOR REDUCING THE VISUAL DISCOMFORT OF THE ILLUMINATION GENERATED BY IMAGING SCANNERS**
VERFAHREN UND VORRICHTUNG ZUM VERRINGERN DES VISUELLEN UNBEHAGENS DAS VON DER BELEUCHTUNG BILDGEBENDER SCANNER ERZEUGT WIRD
PROCÉDÉ ET APPAREIL POUR RÉDUIRE L'INCOMFORT VISUEL GÉNÉRÉ PAR L'ÉCLAIRAGE DES SCANNERS D'IMAGERIE

(30) Priority: 28.05.2009 US 473834
(43) Date of publication of application: 04.04.2012
(73) Proprietor: Symbol Technologies, Inc., Holtsville, NY 11742 (US)
(72) Inventor: STRAT, Askold,, Sound Beach New York 11789 (US); BOEHM, Thomas,, Medford New York 11763 (US); LACKEMANN, Tom,, Sayville New York 11782 (US); PANG, Robert,, Williston Park New York 11596 (US)
(74) Representative: Kopf, Korbinian Paul
(86) International application number: PCT/US2010/034194
(87) International publication number: WO 2010/138296

(56) References cited:
- US-A1- 2007 267 501

## Description

### FIELD OF THE DISCLOSURE

The present disclosure relates generally to imaging scanners for reading optical indicia.

### BACKGROUND

Various electro-optical systems have been developed for reading optical indicia, such as bar codes. A bar code is a coded pattern of graphical indicia comprised of a series of bars and spaces of varying widths, the bars and spaces having differing light reflecting characteristics. Some of the more popular bar code symbologies include: Uniform Product Code (UPC), typically used in retail stores sales; Code 39, primarily used in inventory tracking; and Postnet, which is used for encoding zip codes for U.S. mail. Systems that read and decode bar codes employing charged coupled device (CCD) or complementary metal oxide semiconductor (CMOS) based imaging systems are typically referred to hereinafter as imaging systems, imaging-based bar code readers, or imaging scanners.

Imaging systems electro-optically transform the graphic indicia into electrical signals, which are decoded into alphanumerical characters that are intended to be descriptive of the article or some characteristic thereof. The characters are then typically represented in digital form and utilized as an input to a data processing system for various end-user applications such as point-of-sale processing, inventory control and the like.

Imaging systems that include CCD, CMOS, or other imaging configurations comprise a plurality of photosensitive elements (photosensors) or pixels typically aligned in an array pattern that could include a number of arrays. The imaging-based bar code reader systems employ light emitting diodes (LEDs) or other light sources for illuminating a target object, e.g., a target bar code. Light reflected from the target bar code is focused through a lens of the imaging system onto the pixel array. As a result, the focusing lens generates an image from its field of view (FOV) that is projected onto the pixel array. Periodically, the pixels of the array are sequentially read out creating an analog signal representative of a captured image frame. The analog signal is amplified by a gain factor, by for example, an operational amplifier. The amplified analog signal is digitized by an analog-to-digital converter. Decoding circuitry of the imaging system processes the digitized signals representative of the captured image frame and attempts to decode the imaged bar code.

As mentioned above, imaging scanners typically employ an illumination system to flood a target object with illumination from a light source such as an LED in the reader. Light from the light source is reflected from the target object. The reflected light is then focused through a lens of the imaging system onto the pixel array, the target object being within a field of view of the lens. In order to improve the power consumption and LED lifetime, the light source is typically turned on during a series of exposure periods and turned off in between the exposure periods. The predetermined flashing rate varies as a function of various factors such as the ambient light, the time required to process an image, and the intrinsic design of the hardware. In many cases the flashing frequency is bothersome to the eye and in extreme cases it presents some risk for individuals affected by photosensitive disorders. US 2007/267501 A1 describes an optical reading device for collecting and processing symbology data comprising: an image sensor array of pixels for converting light reflected from a target containing a machine readable indicia into output signals representative thereof, the image sensor being operated in a global shutter mode wherein all or substantially all of the pixels in the array are exposed simultaneously during an exposure time; receive optics for directing light from the target to the image sensor array, the optics having a receive optics optical axis; a processor for decoding the output signals; an illumination source for generating illumination light illuminating the target and illumination optics for directing the illumination light onto the target; a housing encapsulating the image sensor array, receive optics and illumination source; wherein the processor decodes in a first mode to continuously process available output signals automatically and a second mode to output signal in response to an activation event.

Accordingly, there is a need for a method and apparatus for reducing the visual discomfort of the illumination generated by imaging scanners.

### SUMMARY

In one aspect, the invention is directed to a method. The method includes (1) turning on a driving current for a illumination source during each of a series of exposure periods to provide illumination directed toward a target object; (2) capturing an image from the target object with photosensitive circuitry during at least one of the exposure periods; and (3) generating a pulse-width-modulation driving current that has a duty cycle changing with time between two consecutive exposure periods for making perceived gradual illumination changes between the two consecutive exposure periods. The duty cycle decreases from the value of 100% to a minimal value after each of the exposure periods and increases from the minimal value to the value of 100% before each of the exposure periods. Here, the duty cycle is related to a first time interval during which the driving current is turned on and a second time interval during which the driving current is turned off. Specifically, duty cycle is defined as a ratio between (1) the first time interval and (2) the sum of the first time interval and the second time interval.

Implementations of the invention may include the following. The repetition rate of the series of exposure periods can be less than 4 Hz. The sum of the first time interval and the second time interval can be less than 15 ms.

Implementations of the invention can include one or more of the following advantages. With proper design of the repetition rate of the series of exposure periods and proper design of the pulse-width-modulation frequency, the visual discomfort to human observers caused by the illumination generated by imaging scanners can be reduced.

These and other advantages of the present invention will become apparent to those skilled in the art upon a reading of the following specification of the invention and a study of the several figures of the drawings.

### BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a side elevation view of an imaging scanner constructed in accordance with one example embodiment of the present invention.
FIG. 2 is a schematic diagram illustrating a scan engine located within the imaging scanner of FIG. 1.
FIG. 3A shows that the illumination source is turned on during exposure periods but is turned off between the exposure periods.
FIG. 3B shows that the illumination source is turned on during exposure periods but is driven with a pulse-width-modulation (PWM) driving current between the exposure periods.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION

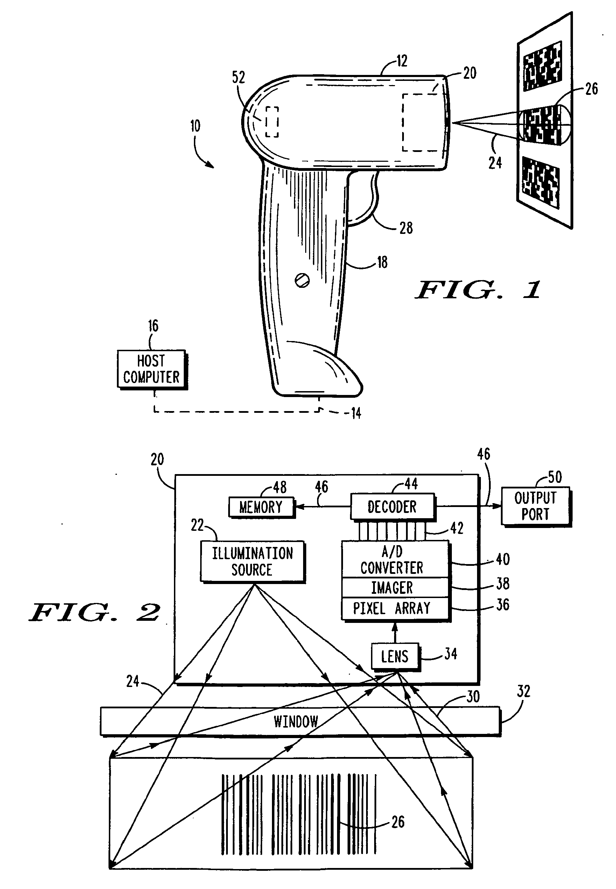

An imaging system 10 includes an imaging scanner 12 in communication 14 either through hard-wire or over-the-air (remote communication) to a host computer 16 as shown schematically in FIG. 1. The imaging scanner 12, in addition to imaging both 1D and 2D bar codes and postal codes, is also capable of capturing images and signatures. In one exemplary embodiment of the present invention, the imaging scanner 12 is a hand held portable imager supported in a housing 18 that can be carried and used by a user walking or riding through a store, warehouse, or plant for imaging bar codes for stocking and inventory control purposes.

However, it should be recognized that the imaging system 10 of the present invention, to be explained below, may be advantageously used in connection with any type of scanner or imaging device, be it portable or stationary. It is the intent of the present invention to encompass all such scanners and imagers.

Internal to the imaging scanner 12 is a scan engine 20. The scan engine 20 includes an illumination source 22 such as a light emitting diode (LED) or bank of LEDs for projecting light 24 at a target object 26 such as a bar code. The imaging scanner 12 can be automatically enabled, continuously enabled, or enabled by engaging a trigger 28, which initiates the projection of the light 24 in the hand-held system 10 as it is directed by a user toward the target object 26.

FIG. 2 is a schematic illustration of the scan engine 20 associated with the imaging scanner 12. Reflected light 30 from the target object 26 passes through a window 32 located in the housing 18 of the imaging scanner 12 onto a focusing lens 34 internal to the scan engine 20. The lens 34 focuses the reflected light onto a pixel array 36 of an imager element 38. The imager element 38 includes photosensitive elements such as the imaging pixel array 36 that could be for example, a charged coupled device (CCD) array or complementary metal oxide semiconductor (CMOS) array. The imager element 38 also includes an analog-to-digital (A/D) converter 40 for converting an analog signal produced by the imager element 38 over to the digital domain.

A bus connection 42 provides a communication link between the imager element 38 and a decoder 44. The bus connection 42 is a high-speed (8) bit parallel interface for providing a digital signal to the decoder 44 representative of the captured image frame. The decoder 44 processes the digitized signals and attempts to decode the target object 26 into decoded information 46. The decoded information 46 can be stored locally by the scan engine 20 in memory 48 and/or communicated to a peripheral device (not shown) such as a monitor or remote computer through an output port 50.

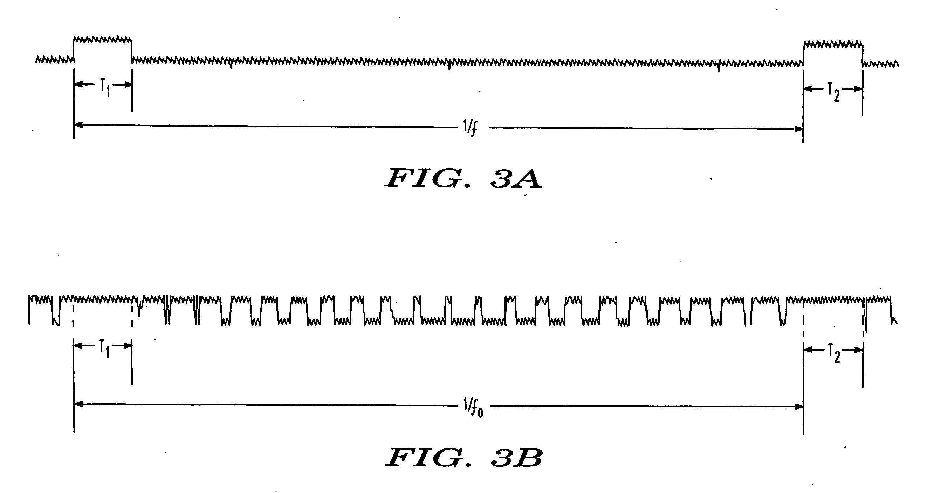

The amount of power consumed by imaging scanner is an important issue, especially for portable scanners powered by their own remote (non-lined) power supply, such as a battery. The more power used during the scanning operation the greater the operating costs, and for portable scanners, the greater the power consumption, the greater the reduction in power or battery life. One of the largest sources of power and operating costs in the imaging scanners is the illumination source, which can include a single or multiple LEDs for capturing images of the target objects. In order to improve the power consumption and LED lifetime, the illumination source is typically turned on during a series of exposure periods and turned off in between the exposure periods. As shown in FIG. 3A, the illumination source is turned on during exposure periods T₁ and T₂, but the illumination source is turned off between the exposure periods. The exposure periods are repeated with a predetermined flashing rate f₀. The predetermined flashing rate f₀ can varies as a function of various factors such as the ambient light, the time required to process an image, and the intrinsic design of the hardware.

In many cases the flashing frequency f₀ is bothersome to the eyes and in extreme cases it presents some risk for individuals affected by photosensitive disorders. The annoyance of the flashing is due to the high sensitivity of the human visual system to sudden transitions from bright to dark. Since LEDs can be turned on and off almost instantaneously and the visual system (specially the peripheral vision) is very susceptible to perceiving such change, a person can become annoyed or distracted by such effect. This sensation can be reduced significantly when LEDs are turned on and off at a frequency above that of what the visual system would perceive as flicker, which is typically above 60 Hz. The brightness can be controlled by varying the duty cycle (the relative on and off time) such that the intensity appears to increase or decrease smoothly. As shown in FIG. 3B, between the exposure periods T₁ and T₂, the LEDs can be driven with a pulse-width-modulation (PWM) driving current. Specifically, after the exposure period T₁, the duty cycle of the PWM driving current decreases smoothly and then it increases smoothly up to the moment at the beginning of the exposure period T₂, Because the duty cycle of the PWM driving current changes smoothly, the illumination as perceived by human observers also changes gradually between the two consecutive exposure periods. Such smooth variation of brightness can be less bothersome to the eyes than the strobe-like illumination.

In accordance with some embodiments, the illumination in the imaging scanners can be designed to minimize the effect of strobe light on persons suffering from photosensitive disorders. It is documented that bright flashing light having the frequency between 4 and 60 Hz (with a highest risk between 16 and 20 Hz) has the potential of triggering unwanted symptoms for people suffering from this condition. The flashing light produced by some of the existing scanner is typically in this range if not properly controlled. Even though, the repetition rate of the flashing light can be reduced to below 4Hz. Such low repetition rate of the flashing light can be bothersome and distracting to the eyes of human observers. To alleviate this discomfort to human observers, the LEDs can be pulse width modulated at some higher frequency, such as 65Hz or higher. When this high PWM frequency is combined with low repetition rate of the flashing light, the illumination in the imaging scanners mainly consists of frequency components that are outside the risky range for people with photosensitive disorders.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a", "has ...a", "includes ... a", "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. An imager (12) for imaging target objects (26) comprising:
an illumination source (22) for providing illumination (24) directed toward a target object (26);
photosensitive circuitry (36) located within said imager (12) for capturing an image from the target object (26) while the imager (12) is activated during an exposure period; and
electronic circuitry operative to
(a) turn on a driving current for the illumination source (22) during each of a series of exposure periods,
**characterized by** being operative to
(b) generate a pulse-width-modulation driving current that has a duty cycle changing with time between two consecutive exposure periods for making perceived gradual illumination changes between the two consecutive exposure periods, wherein the duty cycle is related to a first time interval during which the driving current is turned on and a second time interval during which the driving current is turned off, and the duty cycle is defined as a ratio between (1) the first time interval and (2) the sum of the first time interval and the second time interval, wherein the duty cycle decreases from the value of 100% to a minimal value after each of the exposure periods and increases from the minimal value to the value of 100% before each of the exposure periods.

2. The imager (12) of claim 1, wherein the repetition rate of the series of exposure periods is less than 4 Hz.

3. The imager (12) of claim 1, wherein the sum of the first time interval and the second time interval is less than 15 ms.

4. A method comprising:
turning on a driving current for a illumination source (22) during each of a series of exposure periods to provide illumination (24) directed toward a target object (26);
capturing an image from the target object (26) with photosensitive circuitry (36) during at least one of the exposure periods;
**characterized by**
generating a pulse-width-modulation driving current that has a duty cycle changing with time between two consecutive exposure periods for making perceived gradual illumination changes between the two consecutive exposure periods, wherein the duty cycle is related to a first time interval during which the driving current is turned on and a second time interval during which the driving current is turned off, and the duty cycle is defined as a ratio between (1) the first time interval and (2) the sum of the first time interval and the second time interval, wherein the duty cycle decreases from the value of 100% to a minimal value after each of the exposure periods and increases from the minimal value to the value of 100% before each of the exposure periods.

5. The method of claim 4, wherein the repetition rate of the series of exposure periods is less than 4 Hz.

6. The method of claim 4, wherein the sum of the first time interval and the second time interval is less than 15 ms.

## Patentansprüche

1. Bildgabevorrichtung (12) für die bildgebende Darstellung von Zielobjekten (26), die Folgendes umfasst:
eine Beleuchtungsquelle (22) zum Bereitstellen einer Beleuchtung (24), die auf ein Zielobjekt (26) gerichtet ist;
eine oder mehrere lichtempfindliche Schaltungen (36), die innerhalb der Bildgabevorrichtung (12) angeordnet sind, zum Aufnehmen eines Bildes von dem Zielobjekt (26), während die Bildgabevorrichtung (12) während eines Belichtungszeitraums aktiviert wird; und
eine oder mehrere elektronische Schaltungen, die für Folgendes geeignet sind:
(a) Einschalten eines Ansteuerstroms für die Beleuchtungsquelle (22) während jedes einer Reihe von Belichtungszeiträumen,
**dadurch gekennzeichnet, dass** sie für Folgendes geeignet sind:
(b) Erzeugen eines Impulsbreitenmodulationsansteuerstroms, der einen Arbeitszyklus hat, der sich im zeitlichen Verlauf zwischen zwei aufeinanderfolgenden Belichtungszeiträumen ändert, zum Ausführen wahrgenommener gradueller Beleuchtungsveränderungen zwischen den zwei aufeinanderfolgenden Belichtungszeiträumen, wobei sich der Arbeitszyklus auf ein erstes Zeitintervall, während dem der Ansteuerstrom eingeschaltet ist, und ein zweites Zeitintervall, während dem der Ansteuerstrom ausgeschaltet ist, bezieht, und der Arbeitszyklus als ein Verhältnis zwischen (1) dem ersten Zeitintervall und (2) der Summe des ersten Zeitintervalls und des zweiten Zeitintervalls definiert ist, wobei sich der Arbeitszyklus nach jedem der Belichtungszeiträume von einem Wert von 100 % auf einen Minimalwert verringert und vor jedem der Belichtungszeiträume von dem Minimalwert auf einen Wert von 100 % vergrößert.

2. Bildgabevorrichtung (12) nach Anspruch 1, wobei die Wiederholrate der Reihe von Belichtungszeiträumen kleiner als 4 Hz ist.

3. Bildgabevorrichtung (12) nach Anspruch 1, wobei die Summe des ersten Zeitintervalls und des zweiten Zeitintervalls kleiner als 15 ms ist.

4. Verfahren, das Folgendes umfasst:
Einschalten eines Ansteuerstroms für eine Beleuchtungsquelle (22) während jedes einer Reihe von Belichtungszeiträumen, um eine Beleuchtung (24) bereitzustellen, die auf ein Zielobjekt (26) gerichtet ist;
Aufnehmen eines Bildes von dem Zielobjekt (26) mit einer oder mehreren lichtempfindlichen Schaltungen (36) während mindestens eines der Belichtungszeiträume;
**gekennzeichnet durch**
Generieren eines Impulsbreitenmodulationsansteuerstroms, der einen Arbeitszyklus hat, der sich im zeitlichen Verlauf zwischen zwei aufeinanderfolgenden Belichtungszeiträumen ändert, zum Ausführen wahrgenommener gradueller Beleuchtungsveränderungen zwischen den zwei aufeinanderfolgenden Belichtungszeiträumen, wobei sich der Arbeitszyklus auf ein erstes Zeitintervall, während dem der Ansteuerstrom eingeschaltet ist, und ein zweites Zeitintervall, während dem der Ansteuerstrom ausgeschaltet ist, bezieht, und der Arbeitszyklus als ein Verhältnis zwischen (1) dem ersten Zeitintervall und (2) der Summe des ersten Zeitintervalls und des zweiten Zeitintervalls definiert ist, wobei sich der Arbeitszyklus nach jedem der Belichtungszeiträume von einem Wert von 100 % auf einen Minimalwert verringert und vor jedem der Belichtungszeiträume von dem Minimalwert auf einen Wert von 100 % vergrößert.

5. Verfahren nach Anspruch 4, wobei die Wiederholrate der Reihe von Belichtungszeiträumen kleiner als 4 Hz ist.

6. Verfahren Nach Anspruch 4, wobei die Summe des ersten Zeitintervalls und des zweiten Zeitintervalls kleiner als 15 ms ist.

## Revendications

1. Dispositif d'imagerie (12) pour former des images d'objets cibles (26) comportant :
une source d'éclairage (22) pour délivrer un éclairage (24) dirigé vers un objet cible (26) ;
un circuit photosensible (36) situé à l'intérieur dudit dispositif d'imagerie (12) pour capturer une image provenant de l'objet cible (26) alors que le dispositif d'imagerie (12) est activé pendant une période d'exposition; et
un circuit électronique permettant
(a) d'activer un courant d'entraînement pour la source d'éclairage (22) pendant chacune d'une série de périodes d'exposition,
**caractérisé en ce qu'**il permet de
(b) générer un courant d'entraînement à modulation en largeur d'impulsion qui a un rapport cyclique changeant avec le temps entre deux périodes d'exposition consécutives pour effectuer des changements d'éclairage progressifs perçus entre les deux périodes d'exposition consécutives, dans lequel le rapport cyclique est associé à un premier intervalle de temps pendant lequel le courant d'entraînement est activé et à un second intervalle de temps pendant lequel le courant d'entraînement est coupé, et le rapport cyclique est défini en tant que rapport entre (1) le premier intervalle de temps et (2) la somme du premier intervalle de temps et du second intervalle de temps, dans lequel le rapport cyclique diminue de la valeur de 100 % à une valeur minimale après chacune des périodes d'exposition et augmente de la valeur minimale à la valeur de 100 % avant chacune des périodes d'exposition.

2. Dispositif d'imagerie (12) selon la revendication 1, dans lequel le taux de répétition de la série des périodes d'exposition est inférieur à 4 Hz.

3. Dispositif d'imagerie (12) selon la revendication 1, dans lequel la somme du premier intervalle de temps et du second intervalle de temps est inférieure à 15 ms.

4. Procédé comportant :
l'activation d'un courant d'entraînement pour une source d'éclairage (22) pendant chacune d'une série de périodes d'exposition pour délivrer un éclairage (24) dirigé vers un objet cible (26) ;
la capture d'une image à partir de l'objet cible (26) avec le circuit photosensible (36) pendant au moins une des périodes d'exposition ;
**caractérisé par**
la génération d'un courant d'entraînement à modulation en largeur d'impulsion qui possède un rapport cyclique changeant avec le temps entre deux périodes d'exposition consécutives pour effectuer des changements d'éclairage progressifs perçus entre les deux périodes d'exposition consécutives, dans lequel le rapport cyclique est associé à un premier intervalle de temps pendant lequel le courant d'entraînement est activé et un second intervalle de temps pendant lequel le courant d'entraînement est coupé, et le rapport cyclique est défini en tant que rapport entre (1) le premier intervalle de temps et (2) la somme du premier intervalle de temps et du second intervalle de temps, dans lequel le rapport cyclique diminue de la valeur de 100 % à une valeur minimale après chacune des périodes d'exposition et augmente de la valeur minimale à la valeur de 100 % avant chacune des périodes d'exposition.

5. Procédé selon la revendication 4, dans lequel le taux de répétition de la série de période d'exposition est inférieur à 4 Hz.

6. Procédé selon la revendication 4, dans lequel la somme du premier intervalle de temps et du second intervalle de temps est inférieure à 15 ms.
